# EUROPEAN PATENT APPLICATION

(11) **EP 2 618 241 A1**
(43) Date of publication of application: **24.07.2013**
(21) Application number: 12151634.8
(22) Date of filing: 18.01.2012
(51) Int. Cl.: G06F 3/044, G06F 1/16

(54) **Device and accessory with capacitive touch point pass-through**

(71) Applicant: Research In Motion Limited, Waterloo, ON N2L 3W8 (CA)
(72) Inventor: Mc Kenzie, Donald Somerset, Waterloo, Ontario N2L 3W8 (CA); Murchison, Ian James, Waterloo, Ontario N2L 3W8 (CA)
(74) Representative: Greenaway, Martin William

(57) **Abstract**

A touch sensitive input apparatus and operating method. The input apparatus (102) includes an input panel (104) with at least one capacitive touch sensor (350, 550). A moveably positioned cover (202) is positionable over at least part of the input panel. Within the cover is at least one capacitive touch point pass-through (320, 520) having a first side (302,304, 306, 501, 503, 505) exposed on the cover's front surface and extending through the cover towards an opposite back surface (326) of the cover, which faces the input panel. The side of the capacitive touch point pass-through that is opposite the front surface capacitively couples to at least one capacitive touch sensor of the input panel when the cover is positioned over the input panel. A method (700) identifies the cover (705) placed over the input panel, maps capacitive touch point pass-throughs of the identified to portions of the input panel (710), and configures displays (706) to present visual content at locations corresponding to windows of the identified cover.

## Description

### FIELD OF THE DISCLOSURE

The present disclosure generally relates to user interface devices and more particularly to accessories for touch sensitive user interfaces.

### BACKGROUND

Electronic devices include touch sensitive user input facilities, such as "touch screens" or "track pads" that identify the location on the screen at which a user is touching the screen. Touch sensitive user input facilities detect a user's touching of a portion of a touch sensitive surface through various techniques, such as by monitoring capacitive coupling between sensors on the surface and a user's finger. Graphical displays are usually presented on the touch sensitive surface to indicate locations where a user is to touch the surface to initiate a particular function.

Certain electronic devices that have touch sensitive display screens, such as portable electronic devices including portable telephones and tablet computers, are often carried in an enclosure such as a protective or decorative case. One function of such an enclosure is to protect the device from surface scratches or other damage caused by objects that come into contact with the device. Touch sensitive surfaces are susceptible to such damage and scratches or other damage to touch sensitive surfaces may diminish the appearance or even functionality of presenting data on displays incorporating touch sensitive surfaces. A protective case either leaves a touch sensitive surface uncovered in order to allow a user to provide input to the device, or the protective case covers the touch sensitive surface and precludes a user from providing input to the device. Some electronic devices with touch sensitive screens include other input facilities, such as buttons. These other input facilities are generally more resistant to damage by contact with other objects and protective cases are able to include access holes to allow a user touch or otherwise activate these other input facilities to provide input while the electronic device is in the protective cover. These other input facilities add cost and complexity to the electronic device and generally provide functionality that can be performed by the touch sensitive surface.

Therefore, the effectiveness of protective cases for electronic devices with touch sensitive input surfaces is limited by being unable to protect the touch sensitive surfaces while being able to detect user inputs on a touch sensitive surface of the electronic device.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 depicts an electronic device with a touch sensitive surface, according to one example;

FIG. 2 illustrates a touch screen cover with capacitive touch point pass-through, according to one example;

FIG. 3 illustrates a capacitive touch point pass-through block arrangement, according to an example;

FIG. 4 illustrates a capacitive touch point pass-through block top view, according to one example;

FIG. 5 illustrates a capacitive touch point pass-through array arrangement, according to an example;

FIG. 6 illustrates a capacitive touch point pass-through array top view, according to one example;

FIG. 7 illustrates a covered touch screen input process, according to one example;

FIG. 8 illustrates a covered touch sensitive panel architecture, according to one example; and

FIG. 9 is a block diagram of an electronic device and associated components in which the systems and methods disclosed herein may be implemented.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the disclosed subject matter in virtually any appropriately detailed structure and function. Further, the terms and phrases used herein are not intended to be limiting, but rather, to provide an understandable description.

The terms "a" or "an", as used herein, are defined as one or more than one. The term plurality, as used herein, is defined as two or more than two. The term another, as used herein, is defined as at least a second or more. The terms "including" and "having," as used herein, are defined as comprising (i.e., open language). The term "coupled," as used herein, is defined as "connected," although not necessarily directly, and not necessarily mechanically. The term "configured to" describes hardware, software or a combination of hardware and software that is adapted to, set up, arranged, built, composed, constructed, designed or that has any combination of these characteristics to carry out a given function. The term "adapted to" describes hardware, software or a combination of hardware and software that is capable of, able to accommodate, to make, or that is suitable to carry out a given function

Described below are systems and methods for a touch sensitive input apparatus that efficiently allow a capacitive sensor based touch sensitive panel, such as a touch pad, touch screen, and the like, to operate with a cover that contains capacitive touch pass-through structures. The input apparatus includes an input panel with at least one capacitive touch sensor. These at least one capacitive touch sensors are sometimes, but not always, arranged in a grid to allow detection of a location at which a touching object, such as a user's finger, is touching the input panel. In some examples, the input panel includes an electronic image display that presents visual content, such as graphical displays, or combinations of textual and graphical displays, that allow a user to touch an icon, text or other depiction on the electronic image display to make a desired selection, such as to select an object or initiate execution of a function. In further examples, the input panel is a non-display touch pad that allows a user to touch the panel at a certain position to provide an input. Input panels with and without electronic displays allow a user to perform gestures, such as moving one or more touching objects across the input panel in a defined manner, to provide different inputs to a processor interpreting the sensed touch inputs.

The input apparatus further includes a moveably positioned cover that is moveable so as to be positioned over at least part of the input panel. Within the cover is at least one capacitive touch point pass-through. In one example, the capacitive touch point pass-throughs are made of a conductive metal or a non-conductive material, such as plastic, that is coated with a conductive material or material that is able to capacitively couple surfaces on different sides of the pass-through. The capacitive touch point pass-throughs have a first side that is exposed on the cover's front surface. The capacitive touch point pass-throughs extend through the cover towards an opposite back surface of the cover that faces the input panel. The side of the capacitive touch point pass-through that is opposite the front surface capacitively couples to at least one capacitive touch sensor of the input panel when the cover is positioned over the input panel.

As used herein, capacitively coupling refers to transfer of electrical energy through at least partially electrostatic means. In one example, capacitive coupling is achieved by an electric field being developed between two surfaces that are at different electrical potentials. In other words, two surfaces that have a voltage difference between them will have an electric field established between them and energy is able to be transferred through this established electric field. Capacitive coupling is often achieved by two conductors that are in close proximity to each other where each of the two conductors initially has a different electric potential relative to the other. These two surfaces are not necessarily conductors, but are able to maintain electric charges on their surface to create an electric potential. In operation, two surfaces that are capacitively coupled form a capacitor as is known by practitioners of ordinary skill in the relevant arts. Small electrical currents generally flow into or out of these surfaces to equalize the potential, thereby changing the potential of one or both surfaces. In the example of the above described capacitive touch points, a finger being in proximity to such a capacitive touch point will cause a small amount of electrical current to flow into or out of the touch point and the electrical potential of the touch point will thereby change in response to the current flow. A circuit conductively coupled to the touch point will register this change and detect the presence of the finger. As described below, two surfaces that include conductors or other materials are also able to be similarly capacitively coupled such that energy is transferred through an electric field. In such examples, ohmic coupling is also possible between the two surfaces whereby energy is transferred through direct electron movement. Ohmic coupling does not preclude capacitive coupling where energy is also transferred by electric fields.

The covers of some examples include an identification module that allows a processor monitoring inputs from the input panel to identify which cover is positioned over the input panel. That processor is also configured with information for a variety of covers that describe the location of the capacitive touch point pass-through within the cover. The processor is then able to map capacitive touch point pass-throughs of the identified cover to portions of the input panel and qualify or modify the accepted touch inputs from the input panel in accordance with the described structure of the pass-throughs in the cover. For example, some covers include a number of separate, electrically isolated capacitive touch point pass-throughs that each capacitively couple to different capacitive touch sensors on the touch panel. A user is therefore able to perform a gesture, such as moving a touching object across a number of capacitive touch point pass-throughs, and the different capacitive touch sensors on the touch panel that couple to the touching object through the capacitive touch point pass-throughs with which the touching object is in contact. A processor is able to identify which areas of the input panel are in proximity to the multiple, isolated capacitive touch point pass-throughs and only accept touch input gestures from those areas.

In some examples, the cover is constructed to cover all or part of a display that may or may not be part of the touch panel. Such a cover is able to have a display window that allows part of the display to be viewed through the cover. In various examples, a display window is able to be made of various types of transparent materials. Examples of transparent materials used to form display windows within the cover include glass, clear or colored plastic, transparent fabrics, or Thermoplastic Polyurethanes (TPUs). Based upon the identification of the cover, a processor is able to configure the presentation of information, such as visual content, on the display to cause presented images, text, or combinations of both, to be presented at locations corresponding to window or windows of the identified cover that is placed over the display.

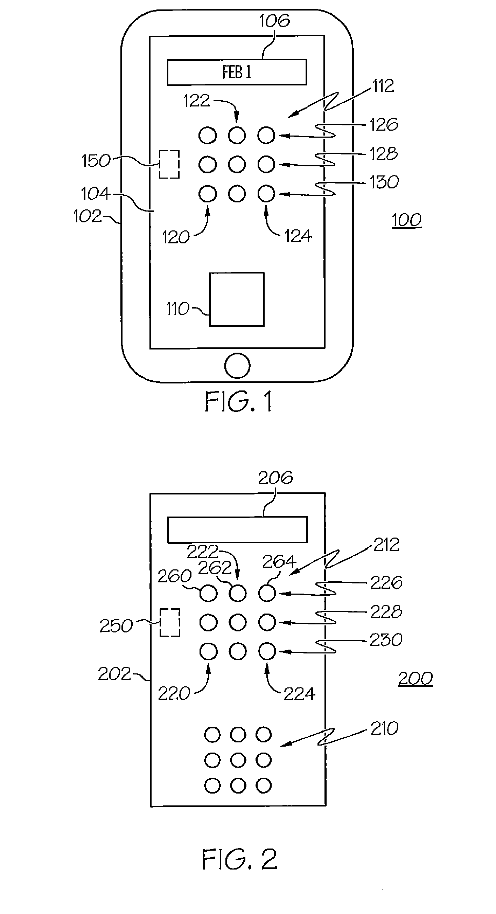

FIG. 1 depicts an electronic device with a touch sensitive surface 100, according to one example. The electronic device with a touch sensitive surface 100 is an example of a device 102, such as a smart phone or tablet computer, that includes a touch screen 104. The touch screen 104 is a graphical electronic display that is used to present changeable images to a user. Touch screens 104 of various examples are able to be large or small screens to accommodate different designs of various electronic devices. In various examples, Graphical User Interfaces (GUIs) are presented on the touch screen 104 and a user is able to touch the touch screen in the vicinity of a presented icon to activate a function. The touch screen 104 in one example is a touch sensitive input apparatus with a capacitive touch sensitive surface that detects locations of a user's touch by detecting changes in capacitive coupling between a grid of touch sensors located on the touch screen 104 and a touching object that is brought near to or into contact with the surface of the touch screen 104. An example of a touching object is a user's finger or a device that is at a different electrical potential than the touch screen sensors whereby capacitive coupling between the touching object and the capacitive touch sensitive surface can be detected.

The touch screen 104 is one example of a touch sensitive input panel. A touch sensitive input panel is an input panel that includes a number of touch sensors to determine when a touching object touches or is in proximity to the input panel and also determines a location on the input panel where the touching object is touching or is closest to the input panel. Touch sensors in some examples include capacitive touch sensors that include electrical conductors that are ohmically isolated from but that capacitively couple to a touching object, such as a user's finger, that is in proximity to the sensor and that is at a different electrical potential. Each touch sensor on the input panel has an associated location and when capacitive coupling between particular touch sensors and a touching object is detected, the touching object is determined to be touching the touch panel, or to be proximate to the touch panel, in the region of the touch panel that contains those particular touch sensors.

The depicted device 102 is adapted to operate with a cover that includes capacitive touch point pass-through structures. An example of a cover that includes capacitive touch point pass-through structures is described in further detail below. The illustrated touch screen 104 is shown to include a display area 106, a first touch region 110 and a second touch region 112. As is further described below, a cover for the device 102 is designed to cover part of the touch screen 104 while allowing a user view the display area 106 and convey capacitive coupling from a user's finger to the first touch region 110 and to separate portions of the second touch region 112.

The device 102 further includes a cover sensor 150. The cover sensor 150 in one example cooperates with features of a cover enclosing or otherwise protecting the device 102 to identify the presence of and the identity of that cover. Based upon the determined identity of the cover, the device 102 is able to alter the location, size, other features, or combinations of these aspects, of one or more of the display area 106, the first touch region 110 and the second touch region 112 to correspond to characteristics of the identified cover. Features of a cover that are accommodated according to identification of the cover by the cover sensor 150 include portions of the touch screen 104 to which the particular cover allows visual access and locations on the touch screen 104 to which the particular cover capacitively conveys touching on the outside of the cover. A processor within the device 102 in some examples stores characteristics of a number of covers in association with identification information in a cover characteristic storage. The identification information

The first touch region 110 of the touch screen 104 is a single region that, when touch is detected anywhere within that region, causes a particular response. An analogy for the first touch region 110 is a large "button" or other GUI icon that when touch by a user causes a particular response. In one example, a processor monitoring input from the touch screen 104 is configured to identify and respond to "press inputs" that are detected in the first touch region 110. A "press input" is a type of touch input where a touching object, such as a user's finger, touches the region but does not move along the region. Examples of press inputs include "taps" and "holds." A "tap" is a touch input in which a user places a touching object on the region and then removes the object from the region. A "hold" is a touch input where a user places the touching object on the region and allows the object to remain in contact or near the region for a period of time. In various examples, different responses, such as executing different commands, can be performed in response to "tap" and "hold" touch inputs that are detected within the first touch region 110.

The second touch region 112 includes a two dimensional array of touch sensitive regions. A three-by-three array of touch sensitive regions is depicted, including a first column 120, a second column 122, a third column 124, a first row 126, a second row 128, and a third row 130. In alternative examples, a touch region is able to consist of either a one dimensional arrangement of any number of touch sensitive regions, or a two dimensional array of any number of touch sensitive regions. In one example, the array of touch sensitive regions within the second touch region 112 operate to detect motion of a user's finger touching or in proximity to the second touch region 112. In one example, a user's finger swiping from left to right will be detected as first being in proximity to sensors in the first column 120. As the figure is swiped from left to right, sensors will determine that the touch has left the first column 120 and moved to sensors of the second column 122. As the swipe further progresses, the sensors will determine that the touch has left the second column 122 and moved to sensors of the third column 124. The time sequence of detected touching across the array of touch sensitive regions is processed to determine a gesture or other dynamic touch input to the touch screen 104. It is clear that the two-dimensional array of touch sensitive regions within the second touch region 112 is able to detect, identify, and distinguish between different gestures performed in any of two dimensions.

In one example, a processor monitoring input from the touch screen 104 is configured to identify and respond to "press inputs" and "swipe inputs" that are detected in the second touch region 112. Press inputs are described above. A "swipe input" is a type of touch input where a touching object, such as a user's finger, touches the region but moves along the region. Examples of swipe inputs include various "gestures" that a user is able to make by moving one or more touch objects along a region. In various examples, different responses, such as executing different commands, can be performed in response to detecting different gestures within the second touch region 112. Commands that are executed in response to detecting a particular gesture in a region are referred to as "swipe commands." In addition to performing "swipe commands" in response to detecting swipe inputs, other commands, referred to as "press commands" are able to be executed in response to "press inputs." Different press commands are further able to be executed in response to detecting "tap" touch inputs or "hold" touch inputs.

FIG. 2 illustrates a touch screen cover with capacitive touch point pass-through 200, according to one example. The touch screen cover with capacitive touch point pass-through 200 is an example of a cover that is able to be used with the device 102 discussed above with regards to FIG. 1. In order to clearly describe the features of the touch screen cover, the illustrated touch screen cover with capacitive touch point pass-through 200 depicts only a touch screen cover 202 that is part of a protective cover (not shown) that encloses the device 102. In particular, the touch screen cover 202 is placed over the touch screen 104. In one example, the touch screen cover 202 is moveably positioned over the touch screen 104 by, e.g., removing the device 102 from the protective cover, placing the device 102 into the protective cover, by moving all or a portion of the touch screen cover 202 away from or towards the touch screen 104, or by any combination of these. The combination of a touch screen 104 and a touch screen cover 202 that is positioned over the touch screen forms a touch sensitive input apparatus.

The touch screen cover 202 in one example has dimensions similar to the touch screen 104 and therefore covers the entire touch screen 104. In further examples, a touch screen cover 202 is able to be smaller than or larger than a touch screen 104 that it is designed to operate with. In general, the touch screen cover 202 is part of a cover or other apparatus that positions the touch screen cover 202 at a known location over the touch screen 104.

The touch screen cover 202 includes a window 206 that is located so as to be placed over the display area 106 of the touch screen 104. The window 206 is generally a transparent or translucent screen that allows the display area 106 to be visually observed while the touch screen cover 202 is covering and protecting the touch screen 104. In various examples, the window is able to be made of various types of materials, such as glass, rubber, clear or colored plastic, transparent fabrics, or Thermoplastic Polyurethanes (TPUs).

The touch screen cover 202 has a first capacitive touch point pass-through region 210. The first capacitive touch point pass-through region 210 is described in further detail below. The first capacitive touch point pass-through region 210 includes multiple conductive points that pass through the surface of the touch screen cover so that a user is able to touch them. These multiple conductive points are able to be arranged in any pattern to create a graphical design, such as a device's logo. As described in detail below, these multiple conductive points are electrically connected to a conductive plate on an opposite side of the touch screen cover 202. This conductive plate is located over the first touch region 110 when the touch screen cover is located over the touch screen 104. A user touching any one or more of these multiple conductive points while the touch screen cover 202 is located over the touch screen 104 is able to cause sensors on the touch screen 104 to capacitively couple to the user's fingers that are touching one or more conductive points of the first capacitive touch point pass-through region 210.

The touch screen cover 202 also has a second capacitive touch point pass-through region 212. The second capacitive touch point pass-through region 212 is described in further detail below. The second capacitive touch point pass-through region 212 includes multiple conductive points that pass through the surface of the touch screen cover 202 so that a user is able to touch them. These multiple conductive points are able to be arranged in any pattern to create a graphical design, such as a company's logo. As described in detail below, these multiple conductive points each pass through the touch screen cover 202 to separate conductive surfaces that are present on the opposite side of the touch screen cover 202. These separate conductive surfaces are located over respective touch sensitive regions of the second touch region 112 when the touch screen cover is located over the touch screen 104. A user touching any one or more of these multiple conductive points while the touch screen cover 202 is located over the touch screen 104 is able to cause sensors on the touch screen 104 to capacitively couple to the user's fingers that are touching one or more conductive points of the second capacitive touch point pass-through region 212.

The depicted second capacitive touch point pass-through region 212 is illustrated as a three-by-three array of conductive points. This three-by-three array generally corresponds to the two dimensional array of touch sensitive regions of the second touch region 112. As described below, the location of the conductive points of the second capacitive touch point pass-through region 212 on the surface of the touch screen cover 202 are not required to directly correspond locations of the touch sensitive regions of the second touch region 112. The three-by-three array of conductive points of the second capacitive touch point pass-through region 212 are shown to include a first column 220, a second column 222, a third column 224, a first row 226, a second row 228, and a third row 230. A first conductive column 260 is depicted as a conductive point that is in the first column 220 and the first row 226. A second conductive column 262 and a third conductive column 264 are further shown in the first row 226 and, respectively, in the second column 222 and the third column 224.

The touch screen cover 202 further includes a identification module 250 The identification module cooperates with the cover sensor 150 to indicate that a touch screen cover 202 is located on top of the touch screen 104, and also to identify the particular touch screen cover 202. A device 102 is able to alter operation based upon the detection and identification of the touch screen cover 202. For example, based on the identity of the particular touch screen cover 202, processing within the device 102 is able to alter the location of the display area 106 to correspond with the location of a window 206 of the touch screen cover 202. The processing of the device 102 is also able to later the location, composition, or both, of touch regions, such as the first touch region 110 and the second touch region 112, that are presented on the touch screen 104. The processing of the device 102 is also able to alter its reaction to touches that are detected in a touch region, as is described below.

The identification module 250 is able to use various identification techniques. For example, a Near Field Communications (NFC) responder is able to be embedded into the touch screen cover 202. The Near Field Communications responder responds to wireless interrogations with a wireless response containing a code associated with a particular touch screen cover configuration. Electronic devices 102 configured to operate with a particular touch screen covers are programmed to recognize the codes associated with those touch screen covers and identify which of those touch screen covers is located on the touch screen 104 of that device 102. Other examples of identification techniques include electrical communications circuits to communicate between a cover sensor 150 or other processor within the electronic device and an identification module in the touch screen cover, or optical markers such as bar codes or the like that are sensed by a cover sensor 150 of the electronic device, such as a camera. Identification module 250 of various touch screen covers are able to use any suitable identification technique that corresponds with cover sensors 150 included in an electronic device with which the cover is intended to operate.

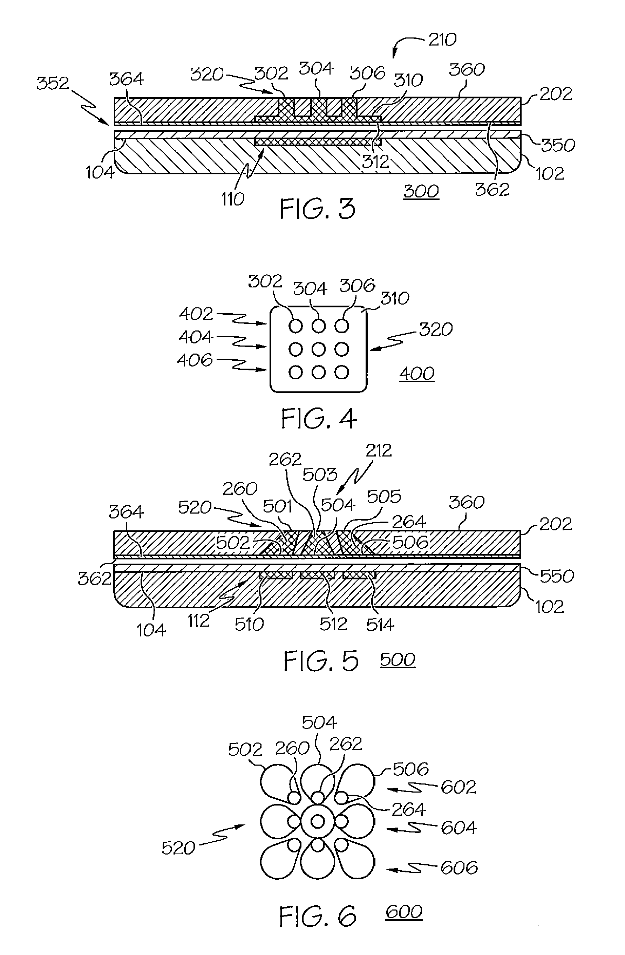

FIG. 3 illustrates a capacitive touch point pass-through block arrangement 300, according to an example. The capacitive touch point pass-through block arrangement 300 depicts a side view detail of an area containing the first touch region 110 and the first capacitive touch point pass-through region 210 when the touch screen cover 202 is placed over the touch screen 104. The device 102 is shown with the touch screen 104 that has an array of capacitive touch sensors 350. In general, the touch screen 104 is exposed to the user with the array of touch sensors 350 located so as to detect capacitive coupling between a user's finger and particular sensors within the array of touch sensors 350.

In the depicted capacitive touch point pass-through block arrangement 300, a touch screen cover 202 is placed over the touch screen 104. The touch screen cover 202 has a top side 360 and a bottom side 362 that is opposite the top side 360. The illustrated area of the capacitive touch point pass-through block arrangement 300 depicts the presence of the first touch region 110 on the touch screen 104 as is discussed above with regards to FIG. 1. The illustrated area of the capacitive touch point pass-through block arrangement 300 further depicts a capacitive touch point pass-through in the form of a capacitive point pass-through block 320 that is located within the touch screen cover in the area of the first capacitive touch point pass-through region 210. As discussed above, when the touch screen cover 202 is placed over the touch screen 104, the first capacitive touch point pass-through region 210 is positioned above the first touch region 110.

In general a gap 352 exists between the bottom side 362 of the touch screen cover 202 and the touch screen 104 when the touch screen cover 202 is over the touch screen 104. The gap 352 is able to be caused by the structure of portions of the touch screen cover 202, manufacturing irregularities in the surface of the bottom side 362 of the touch screen cover 202, other causes, or combinations of these causes. Further, the bottom side 362 of the touch screen cover 202 has a protective layer 364 to protect the touch screen 104 from scratches or other damage by the touch screen cover 202, particularly as might be caused by contact between the touch screen 104 and the touch point pass-through block 320, which is sometimes made of a ridged material.

The side view of the first capacitive touch point pass-through region 210 depicted in the capacitive touch point pass-through block arrangement 300 shows the capacitive touch point pass-through block 320 to have three conductive columns that extend through the top side 360, a first conductive column 302, a second conductive column 304, and a third conductive column 306. These three columns extend to the edge of the top surface 360. In further examples, the conductive columns 306 are able to extend beyond the top surface 360, or even be recessed slightly into the top surface 360 so as to allow a pressing finger to contact the top of these conductive columns.

The three conductive columns extend down into the touch screen cover 202 to a bottom plate 310 and towards the back surface 362. The bottom plate 310 in this example is a conductive plate that is part of the capacitive touch point pass-through block 320 and that extends over an area that corresponds to the first touch region 110. In the illustrated example, the bottom plate 310 is located within the touch screen cover 202 and has a surface that is proximate to the back surface 362 by being separated from the back surface 362 by the protective layer 364. In further examples, the bottom plate 310 is able to be recessed further away from back surface 362 within the touch screen cover 202 or extend to form part of the back surface 362. In another example, the bottom plate 310 is able to extend away from the touch screen cover 202 and have a portion that extends beyond the back surface 362.

The capacitive touch point pass-through block 320 has a first side that consists of the ends of the three conductive columns that are at or near the front surface 360. In one example, the first side of the capacitive touch point pass-through block 320 exposes the ends of these conductive columns on the front surface 360. The capacitive touch point pass-through block 320 has a second side that is formed by the side of the bottom plate 310 that is adjacent to the back surface 362. The bottom plate 310 has a back side surface 312 that faces and is proximate to the touch screen 104. The capacitive touch point pass-through block 320 in one example is formed of electrically conductive material such that the first side is conductively coupled to the second side. In operation, capacitive sensors, which include conductors, within the first touch region 110 of the touch screen 104 have an effective capacitive coupling to a touching object, such as a finger of a person, that is touching one or more of the first side of the conductive columns exposed on the top surface 360. This capacitive coupling is through a path that includes the bottom plate 310 and the one or more of the conductive columns with which the touching object is in contact.

It is to be noted that the capacitive touch point pass-through block arrangement 300 depicts a side view of the first touch region 110 and the first capacitive touch point pass-through region 210. This side view of the first capacitive touch point pass-through region 210 depicts only three conductive columns, which generally correspond to one line of touch points as depicted in touch screen cover with capacitive touch point pass-through 200. It is clear that the first capacitive touch point pass-through region 210 is able to include a two dimensional array of touch points as presented on the front surface 360. It is further clear that these multiple touch points, which are all conductively coupled to one or more of the bottom plate 310, are able to have tips arranged on the front surface in any configuration.

In operation when the touch screen cover 202 is positioned over at least part of the touch screen 104, the capacitive touch point pass-through block 320 electrically couples the potential of the person's finger touching the top surface 360 to the bottom plate 310 located on the back surface 362. The coupling between the capacitive sensors located in the array of capacitive touch sensors 350 that are proximate to the bottom plate 310 causes those sensors to detect capacitive coupling to the user's finger, and provides a touch detection in response thereto. As discussed below, the processing within the device 102 is able to respond to this touching of the first capacitive touch point pass-through region 210 by, for example, presenting information in the display area 106 that can be seen through the display window 206.

FIG. 4 illustrates a capacitive touch point pass-through block top view 400, according to one example. The capacitive touch point pass-through block top view 400 presents a top view of the capacitive touch point pass-through block 320 discussed above. The capacitive touch point pass-through block top view 400 depicts a first conductive column row 402 that includes the three conductive columns discussed above, the first conductive column 302, the second conductive column 304, and the third conductive column 306, along one end of the capacitive touch point pass-through block 320.

The capacitive touch point pass-through block top view 400 further illustrates a second conductive column row 404 and a third conductive column row 406 that each contain three conductive columns similar to first conductive column row 402. Although the capacitive touch point pass-through block top view 400 depicts the conductive columns as being arranged in a three-by-three square array, further examples are able to arrange in any manner any collection of one or more conductive columns or other conductive structures that extend to a front surface 360 of a touch screen cover. For example, a number of conductive columns are able to be arranged to form or outline a logo or other graphical depiction. Further, a number of conductive columns that each has a different dimension are able to be arranged to form a particular depiction on the front surface 360. It is further clear that a conductive structure similar to the bottom plate 310, but with a thickness such that the structure extends from the back surface 362 to the top surface 360, is able to form a capacitive touch point pass-through block 320.

FIG. 5 illustrates a capacitive touch point pass-through array arrangement 500, according to an example. The capacitive touch point pass-through array arrangement 500 depicts a side view detail of an area containing of the second touch region 112 and the second capacitive touch point pass-through region 212 when the touch screen cover 202 is placed over the touch screen 104. In a manner similar to that discussed above with regards to FIG. 3, the touch screen 104 has an array of capacitive touch sensors 550 that detect capacitive coupling between a user's finger and particular sensors within the array of touch sensors 550. In the example of the capacitive touch point pass-through array arrangement 500, however, these multiple columns are electrically isolated from one another.

In the depicted capacitive touch point pass-through array arrangement 500, a touch screen cover 202 is moveably placed over the touch screen 104. The touch screen cover 202 has a top side 360 and a bottom side 362 that is opposite the top side 360. The illustrated area of the capacitive touch point pass-through array arrangement 500 depicts the presence of the second touch region 112 on the touch screen 104 as is discussed above with regards to FIG. 1. The illustrated area of the capacitive touch point pass-through array arrangement 500 further depicts a capacitive touch point pass-through array 520 that is located within the touch screen cover in the area of the second capacitive touch point pass-through region 212. As discussed above, when the touch screen cover 202 is placed over the touch screen 104, the second capacitive touch point pass-through region 212 is positioned above the second touch region 112.

The side view of the second capacitive touch point pass-through region 212 depicted in the capacitive touch point pass-through array arrangement 500 shows the capacitive touch point pass-through array 520 to have three conductive columns that extend from the top side 360 through the touch screen cover 202 towards the bottom side 362. The capacitive touch point pass-through array 520 has a first side that is near to and exposed on the front surface 360. The capacitive touch point pass-through array 520 also has a second side that is proximate to the back surface 362. In the illustrated example, the touch screen cover 202 has a protective layer 364 on the back surface that separates the second side of the capacitive touch point pass-through array 520 from the back surface 362.

The side view of the capacitive touch point pass-through array 520 depicts the first conductive column 260, the second conductive column 262, and the third conductive column 264. These three columns extend to the edge of the top surface 360 where their first sides are exposed to a touching object in contact with the top surface 360. In further examples, the conductive columns 306 are able to extend beyond the top surface 360, or even be recessed slightly into the top surface 360. These three conductive columns are also conductively insulated from one another.

The three conductive columns extend down into the touch screen cover 202 towards the back surface 362. The illustrated conductive columns are shown to expand in cross-sectional area as they extend through the touch screen cover 202. In one example, the larger surface area of each conductive column that is proximate to the back surface 362 provides greater capacitive coupling to the sensors of the array of capacitive touch sensors 550 that are near that conductive column. It is to be noted that in general, touch sensors within the array of capacitive touch sensors 550 each include a conductor that is ohmically isolated from but capacitively couples to objects that are in proximity to the particular touch sensor.

In this illustrated example, the first conductive column 260 has a first back end 502, which is an end proximate to the back surface 362, or second side, that is opposite a first touch sensitive region 510 of the array of capacitive touch sensors 550. The first conductive column 260 further has a first front end 501 that is opposite the first back end 502. In operation, an electric potential of a person's finger or other object that is touching the first front end 501 of the first conductive column 260 is conducted to the first back end 502. Due to the first conductive column conducting the electric potential of an object touching the first front end 501 to the first back end 502, the object touching the first front end 501 is capacitively coupled to the first touch sensitive region 510 within the array of capacitive touch sensors 550.

As also depicted in the capacitive touch point pass-through array arrangement 500, the second conductive column 262 and the third conductive column 264 each has a second back end 504 and a third back end 506, respectively. The second conductive column 262 and the third conductive column 264 further each has a second front end 503 and a third front end 505, respectively. As is shown, the second back end 504 and the third back end 506 are respectively opposite the second front end 503 and the third front end 505. The second back end 504 and the third back end 506 are respectively proximate to a second touch sensitive region 512 and a third touch sensitive region 514 and thereby capacitively couple, respectively, to the second touch sensitive region 512 and the third touch sensitive region 514 of the array of capacitive touch sensors 550. The second conductive column 262 and the third conductive column 264 thereby operate to capacitively couple object touching the respective second front end 503 and the third front end 505 to the second touch sensitive region 512 and the third touch sensitive region 514, respectively.

In the illustrated example, the surfaces of the conductive columns near the back surface 362 are recessed away from back surface 362 within the touch screen cover 202. In other examples, these surfaces of the respective second sides of the three conductive columns are able to form part of or extend away from the back surface 362.

The conductive columns of the capacitive touch point pass-through array 520 in one example are formed of electrically conductive material such that capacitive sensors within the second touch region 112 of the touch screen 104 have an effective capacitive coupling to a finger of a person touching one or more of the conductive columns on the top surface 360. In operation, the capacitive touch point pass-through array 520 electrically couples the potential of the person's finger touching a subset of the conductive columns on the top surface 360 to the surface of the conductive columns located near the back surface 362 through a path that includes the respective second sides of the subset of conductive columns that the finger is touching. The coupling between the capacitive sensors located in the array of capacitive touch sensors 350 that are in the vicinity of the conductive columns being touched by a user causes those sensors to detect capacitive coupling to the user's finger, and provide a touch detection in response thereto.

The capacitive touch point pass-through array 520 in this example consists of an array of conductive columns that are disposed in a defined pattern on the top surface 360 of the touch screen cover 202. Each of the conductive columns in this array extend to the opposite surface of the touch screen cover and have a conductive surface in proximity to different touch sensitive regions of the touch screen 104. As such, the sensors within the array of sensors 550 of the touch screen 104 couple to the user's finger only through the conductive columns within the capacitive touch point pass-through array 520 that the user is touching. Processing within the device 102 is able to determine which touch sensitive areas of the touch screen 104 have detected capacitive coupling to a finger, and such processing is therefore able to determine which conductive columns within the capacitive touch point pass-through array 520 the user is touching.

In one example, a correspondence between touch sensitive areas on the touch screen 104 and particular conductive columns within the capacitive touch point pass-through array 520 is able to be determined based upon, for example, identification of the touch screen cover 202 covering the touch screen 104. The identification of a particular touch screen cover 202 is able to be made based upon, for example, the identification module 250 contained within the touch screen cover 202, or contained in a case or other apparatus of which the particular touch screen cover 202 is a part. Based upon identification of the touch screen cover 202 and configuration information regarding the position of particular conductive columns within the touch screen cover 202, the processing of the device 102 is further able to identify the location on the top surface 360 of the particular conductive column or columns that the user's finger is touching.

FIG. 6 illustrates a capacitive touch point pass-through array top view 600, according to one example. The capacitive touch point pass-through array top view 600 is similar to the capacitive touch point pass-through block top view 300, discussed above, except that the separate conductive columns of the capacitive touch point pass-through array 520 are depicted. A first conductive column row 602 is shown on the top edge of the capacitive touch point pass-through array top view 600, and includes three conductive columns, the first conductive column 260, the second conductive column 262, and the third conductive column 264. The capacitive touch point pass-through array top view 600 additionally shows a second conductive column row 604 and a third conductive column row 606 that each contains three conductive columns. The illustrated capacitive touch point pass-through array top view 600 depicts an array of conductive columns that have top surfaces that form a square array on the top surface 360 of the touch screen cover 202. In further examples, the top surfaces of the conductive columns are able to be arranged in any configuration. For example, the top surfaces of the conductive columns of the capacitive touch point pass-through array 520 are able to be arranged to form or outline a logo or other graphical presentation.

The capacitive touch point pass-through array top view 600 illustrates that each conductive column of the capacitive touch point pass-through array 520 expands to have a back surface that is larger than the top surface. Each conductive column has a top surface, located on the top surface 360 of the touch screen cover 202, that is electrically coupled to its back surface, that is located on the back surface 362 of the touch screen cover. Because the top surface and back surface of each conductive column are electrically coupled, back surface of a particular conductive column is able to be located at any position on the back surface 262 of the touch screen cover 202. This allows the conductive columns to present a pattern on the back surface 362 of the touch screen cover 202 that is different than the pattern presented on the top surface 360 of the touch screen cover 202. The touch screen 104 detects capacitive couplings to the back surfaces of the conductive columns. As depicted, the conductive columns are able to be formed so as to back surfaces with larger areas than the area of the top surfaces. Such larger areas are able to provide enhanced capacitive coupling to the sensors of the touch screen 202.

A processor within the electronic device 102 is able to determine a time varying location of capacitive couplings between sensors on the touch screen 104 and different conductive columns that a user is touching. Such time variations indicate, for example, a gesture performed by a user by moving one or more fingers across the capacitive touch point pass-through array 520.

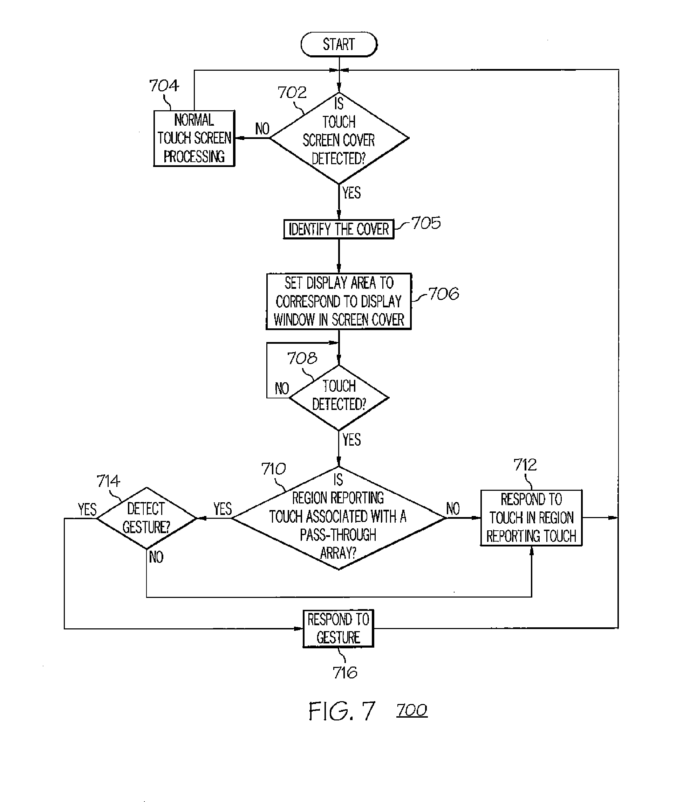

FIG. 7 illustrates a covered touch screen input process 700, according to one example. The covered touch screen input process 700 is performed by an electronic device 102 that is configured to operate with a touch screen cover that includes one or more capacitive touch point pass-through structures, such as are described above.

The covered touch screen input process 700 begins by determining, at 702, if a touch screen cover is detected. As discussed above, some touch screen covers include an identification module 250 that operates in conjunction with an identity sensor 150 to detect the presence and identity of a particular touch screen cover. Further examples are able to detect a touch screen cover by other techniques, including a user interface that allows a user to specify that a cover is present, an ambient light detector that detects blockage caused by a structure such as a touch screen cover, or any other detection technique. If a touch screen cover is not detected, the covered touch screen input process 700 continues by performing, at 704, normal touch screen input processing and returning to determining, at 702, if a touch screen cover is detected.

Upon detection of a touch screen cover, the covered touch screen input process 700 continues by setting, at 706, a display area to correspond to a display window of the detected touch screen cover. In general, a touch screen cover is able to have a portion of the cover constructed of transparent material, or simply have an open cut out, that allows a portion of the visual content, such as images, displayed on the touch screen to be seen by a user while still protecting the touch screen. The location and size of the display window is able to be configured according to, for example, information stored in the device about display window size and locations for the detected touch screen cover.

The covered touch screen input process 700 proceeds by determining, at 708, if a touch is detected by the touch screen. As discussed above, at touch detected by the touch screen when a touch screen cover is detected suggests that a user has touched a capacitive touch point pass-through region of the touch screen cover. If no touch is detected, the process continues by repeating this determination.

If a touch screen touch is detected, the covered touch screen input process 700 proceeds by determining, at 710, if the touch screen region reporting the touch is associated with a capacitive touch point pass-through array. As discussed above, a capacitive touch point pass-through array is able to detect both simple touches as well as gestures that are performed by moving one or more fingers across a region. If the region is not associated with a capacitive touch point pass-through array, the covered touch screen input process 700 proceeds to respond, at 712, to the touch in the region detecting the touch. Examples of responses to a touch in a region include, in the case of a mobile telephone touch screen display, presenting an image in the display window of the touch screen case to present current time and date information, images indicating a number of received voicemail messages, missed calls, or other information of interest, or any combination of these. In some examples, a response to a touch can be based on detecting a previous touch within a specified time to identify a sequence of touches. Responses to a sequence of touches include, for example, cycling through a sequence of information that is presented as images or other visual content through a display window of the touch screen cover.

If the detected touch is determined, at 710, to be in a region associated with a capacitive touch point pass-through array, the covered touch screen input process 700 proceeds to determine, at 714, if a gesture has been detected. As discussed above, a gesture is performed by a user moving one or more fingers over a region, such as over a capacitive touch point pass-through array, in a defined manner. An example of a gesture is a user's swiping, or moving rapidly, a finger across a capacitive touch point pass-through array from left to right. Such a gesture is able to indicate, for example, moving forward through a list of items to display. Another, different, gesture can be a swipe from right to left, which indicates moving backwards through the list of items to display.

If a gesture is detected, the covered touch screen input process 700 proceeds by responding, at 716, to the detected gesture. As discussed, a swiping gesture can indicate moving forwards or backwards through a list. In that example, a response to detecting such a gesture is to display the next item or a previous item in the list in an image viewed through a display window of the touch screen cover.

If a gesture is not detected, at 714, the covered touch screen input process 700 proceeds to respond to a touch in the region reporting the touch. Although a capacitive touch point pass-through array is able to detect gestures performed by a user's moving one or more fingers, a capacitive touch point pass-through array is also able to detect a non-moving touch of part or all of the conductive columns within the capacitive touch point pass-through array. For example, a user is able to simply "press" a finger onto the capacitive touch point pass-through array and remove that finger without movement across the capacitive touch point pass-through array. Such an input is able to be distinguished from a gesture and that input is able to trigger performing a different response.

After responding to either the detected gesture, at 716, or responding to the touch in the detecting region, at 714, the covered touch screen input process 700 returns to determining, at 702, if a touch screen cover is detected.

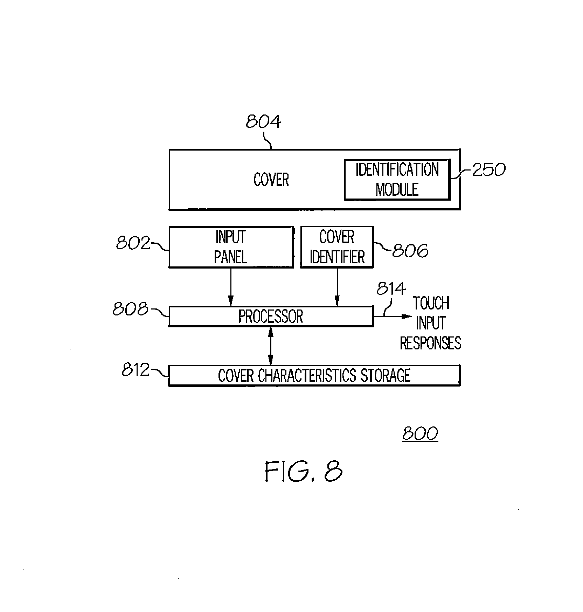

FIG. 8 illustrates a covered touch sensitive panel architecture 800, according to one example. The covered touch sensitive panel architecture 800 depicts certain components contained in an electronic device 102, discussed above, that are relevant to performing the covered touch screen input process 700 described above. The covered touch sensitive panel architecture 800 depicts an input panel 802 and a cover 804. The input panel 802 is a general case of a touch sensitive input panel that detects touch inputs by, for example, capacitive coupling between the input panel 802 and a touching object. One example of an input panel 802 is the touch screen 104 discussed above. In further examples, touch screen 802 is not required to have a display or any presentation capability. The illustrated cover 804 is an example of a touch screen cover 202 that is discussed above.

The cover 804 includes an identification module 250 as is discussed above with regards to FIG. 1. The covered touch sensitive panel architecture 800 further includes a cover identifier 806. A cover identifier operates in conjunction with the identification module 250 within a particular cover 804 that is placed on the input panel 802 to detect the presence of and to identify the particular cover 804 that is covering the input panel 802.

A touch processor 808 receives identification information from the cover identifier 806. The touch processor 808 of the covered touch sensitive panel architecture 800 has access to a cover characteristics storage 812. In one example, the cover characteristics storage 812 stores characteristics of a number of covers that are able to be used with the particular input panel 802 or device containing the input panel 802. In one example, a device is able to store the cover characteristics storage 812 locally. In further examples, data stored in the cover characteristics storage 812 is able to be stored in a remote repository and accessed through a communications link (not shown) from the device to the remote repository. An example of a communications link used to access a remote repository of information includes a wireless data network communications link. In a further example, data defining the cover characteristics are able to be stored in the cover 804 itself and communicated to the touch processor 808.

In one example, the cover characteristics storage 812 stores information about particular touch screen covers that define various characteristics of those covers. Examples of characteristics stored in the cover characteristics storage 812 include locations of display windows within the cover and mappings between areas or regions of the touch screen 802 and capacitive touch point pass-through regions on the front surface of the cover. In the example of the touch screen cover 202 discussed above, the cover characteristics storage 812 stores information that defines the location of the display window 206, the location of the first touch region 110 that corresponds to the second end of the capacitive point pass-through block 320, and the touch sensitive regions within the second touch region 112, as are discussed above.

The touch processor 808 receives touch input detections from the input panel 802. The touch processor 808 processes these detected touch inputs based upon the characteristics data for the detected cover that are stored in the cover characteristics storage 812. Based upon the interpretation of these touch inputs, which is based upon the characteristics stored in the cover characteristics storage 812, the processor produces touch input responses 814. Touch input responses are able to include, for example, commands to be executed in response to the detected touch input.

For example, the touch processor 808 is able to determine, based upon the characteristics stored in the cover characteristics storage 812, if detected touch inputs occur in the first touch region 110 or in the second touch region 112 and respond accordingly. For example, the first touch region 110 is able to be defined in the characteristics data for that particular cover as a "press-only" region. In the above described example, the first touch region 110 would be defined as a press-only region because the capacitive point pass-through block 320 does not convey swipe motions to the touch screen 104. Because the first touch region 110 is defined as a touch input reporting region that is a press-only region, only press inputs, such as hold and tap inputs, are accepted for touch inputs detected by capacitive touch sensors in this region. When touch inputs occur in the first touch region 110, the first touch region is a reporting region that the touch processor 808 declares the touch inputs reported by capacitive touch sensors in the first touch region 110 only produces touch input responses 814 that are touch commands corresponding to detected press inputs by the capacitive touch sensors contained in that region.

Continuing with the example of the touch screen cover 202 described above, the touch processor 808 defines, base upon the characteristics data for the cover stored in the cover characteristics storage 812, the second touch region 112 as a swipe input region. The second touch region 112 is able to be defined as a swipe input region because the second capacitive touch point pass-through region 212 contains a number of independently conducting structures that are able to convey swipe motions to the touch screen 104. Because the second touch region 112 is defined as a swipe input region, the processor is able to accept swipe inputs as well as press inputs that are detected by capacitive touch sensors contained within the second touch region 112. The touch processor 808 therefore produces touch input responses 814 that include either touch commands or swipe commands depending upon the detected touch inputs reported by the capacitive touch sensors in that region.

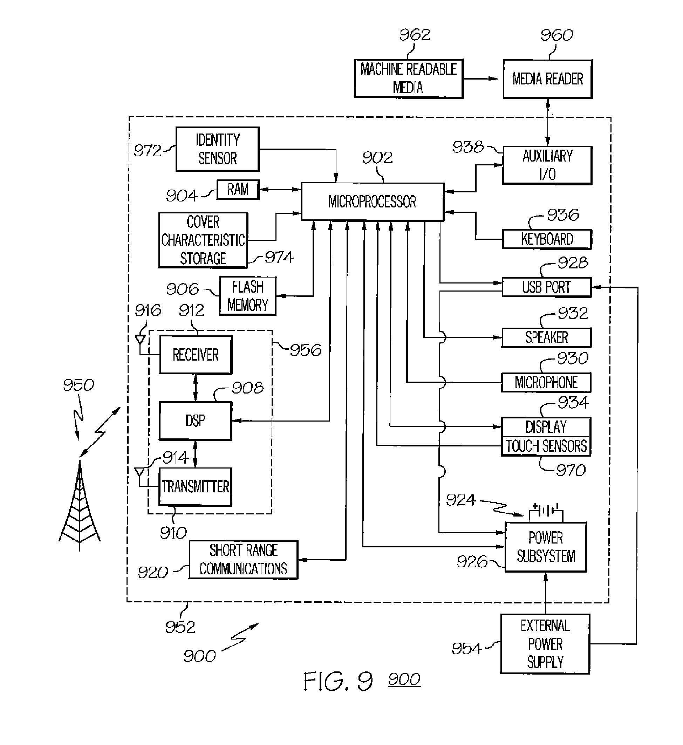

FIG. 9 is a block diagram of an electronic device and associated components 900 in which the systems and methods disclosed herein may be implemented. In this example, an electronic device 952 is a wireless two-way communication device with voice and data communication capabilities, such as the example electronic device 102. Such electronic devices communicate with a wireless voice or data network 950 using a suitable wireless communications protocol. Wireless voice communications are performed using either an analog or digital wireless communication channel. Data communications allow the electronic device 952 to communicate with other computer systems via the Internet. Examples of electronic devices that are able to incorporate the above described systems and methods include, for example, a data messaging device, a two-way pager, a cellular telephone with data messaging capabilities, a wireless Internet appliance or a data communication device that may or may not include telephony capabilities.

The illustrated electronic device 952 is an example electronic device that includes two-way wireless communications functions. Such electronic devices incorporate a communication subsystem 956 that includes elements such as a wireless transmitter 910, a wireless receiver 912, and associated components such as one or more antenna elements 914 and 916. A digital signal processor (DSP) 908 performs processing to extract data from received wireless signals and to generate signals to be transmitted. The particular design of the communication subsystem 956 is dependent upon the communication network and associated wireless communications protocols with which the device is intended to operate.

The electronic device 952 includes a microprocessor 902 that controls the overall operation of the electronic device 952. The microprocessor 902 interacts with the above described communications subsystem elements and also interacts with other device subsystems such as flash memory 906, random access memory (RAM) 904, auxiliary input/output (I/O) device 938, universal serial bus (USB) Port 928, display 934, touch sensors 970, keyboard 936, speaker 932, microphone 930, a short-range communications subsystem 920, a power subsystem and charging controller 926, an identity sensor 972, cover characteristics storage 974, and any other device subsystems.

A power pack 924 is connected to a power subsystem and charging controller 926 as is described in detail above. The power pack 924 provides power to the circuits of the electronic device 952. The power subsystem and charging controller 926 includes power distribution circuitry for providing power to the electronic device 952 and also contains power pack charging controller circuitry to manage recharging the power pack 924. The power subsystem and charging controller 926 receives power from an external power supply 954 that is connected through a power connector of the electronic device 952 or through the USB port 928.

The USB port 928 provides data communication between the electronic device 952 and one or more external devices. Data communication through USB port 928 enables a user to set preferences through the external device or through a software application and extends the capabilities of the device by enabling information or software exchange through direct connections between the electronic device 952 and external data sources rather than through a wireless data communication network.

Operating system software used by the microprocessor 902 is stored in flash memory 906. Further examples are able to use a power pack backed-up RAM or other non-volatile storage data elements to store operating systems, other executable programs, or both. The operating system software, device application software, or parts thereof, are able to be temporarily loaded into volatile data storage such as RAM 904. Data received via wireless communication signals or through wired communications are also able to be stored to RAM 904. As an example, a computer executable program configured to implement the covered touch screen input process 700, described above, is included in a software module stored in flash memory 906.

The microprocessor 902, in addition to its operating system functions, is able to execute software applications on the electronic device 952. A predetermined set of applications that control basic device operations, including at least data and voice communication applications, is able to be installed on the electronic device 952 during manufacture. Examples of applications that are able to be loaded onto the device may be a personal information manager (PIM) application having the ability to organize and manage data items relating to the device user, such as, but not limited to, e-mail, calendar events, voice mails, appointments, and task items.

In one example, the display 934 and the touch sensors 970 are assembled together to form a touch screen display 104. The touch sensors 970 in one example are capacitive touch sensors that operate with capacitive touch point pass-through located in a touch screen cover that is able to be placed on the display 934. The microprocessor in such examples displays graphical user interface (GUI) images on the display 934, and a user is able to activate GUI elements by touching the image. The touch sensors 970 detect this touch and identify a region in which the user has touched the screen. In a configuration where a touch screen cover is placed on the display 934, the microprocessor operates with the identity sensor 972 to detect and identify the touch screen cover placed over the display 934. The cover characterization storage 974 stores data defining characteristics of the touch screen covers that are able to be used with a particular device.

Further applications may also be loaded onto the electronic device 952 through, for example, the wireless network 950, an auxiliary I/O device 938, USB port 928, short-range communications subsystem 920, or any combination of these interfaces. Such applications are then able to be installed by a user in the RAM 904 or a non-volatile store for execution by the microprocessor 902.

In a data communication mode, a received signal such as a text message or web page download is processed by the communication subsystem, including wireless receiver 912 and wireless transmitter 910, and communicated data is provided the microprocessor 902, which is able to further process the received data for output to the display 934, or alternatively, to an auxiliary I/O device 938 or the USB port 928. A user of the electronic device 952 may also compose data items, such as e-mail messages, using the keyboard 936, which is able to include a complete alphanumeric keyboard or a telephone-type keypad, in conjunction with the display 934 and possibly an auxiliary I/O device 938. Such composed items are then able to be transmitted over a communication network through the communication subsystem.

For voice communications, overall operation of the electronic device 952 is substantially similar, except that received signals are generally provided to a speaker 932 and signals for transmission are generally produced by a microphone 930. Alternative voice or audio I/O subsystems, such as a voice message recording subsystem, may also be implemented on the electronic device 952. Although voice or audio signal output is generally accomplished primarily through the speaker 932, the display 934 may also be used to provide an indication of the identity of a calling party, the duration of a voice call, or other voice call related information, for example.

Depending on conditions or statuses of the electronic device 952, one or more particular functions associated with a subsystem circuit may be disabled, or an entire subsystem circuit may be disabled. For example, if the power pack temperature is high, then voice functions may be disabled, but data communications, such as e-mail, may still be enabled over the communication subsystem.

A short-range communications subsystem 920 is a further optional component which may provide for communication between the electronic device 952 and different systems or devices, which need not necessarily be similar devices. For example, the short-range communications subsystem 920 may include an infrared device and associated circuits and components or a Radio Frequency based communication module such as one supporting Bluetooth^{®} communications, to provide for communication with similarly-enabled systems and devices.

A media reader 960 is able to be connected to an auxiliary I/O device 938 to allow, for example, loading computer readable program code of a computer program product into the electronic device 952 for storage into flash memory 906. One example of a media reader 960 is an optical drive such as a CD/DVD drive, which may be used to store data to and read data from a computer readable medium or storage product such as computer readable storage media 962. Examples of suitable computer readable storage media include optical storage media such as a CD or DVD, magnetic media, or any other suitable data storage device. Media reader 960 is alternatively able to be connected to the electronic device through the USB port 928 or computer readable program code is alternatively able to be provided to the electronic device 952 through the wireless network 950.

Information Processing System

The present subject matter can be realized in hardware, software, or a combination of hardware and software. A system can be realized in a centralized fashion in one computer system, or in a distributed fashion where different elements are spread across several interconnected computer systems. Any kind of computer system - or other apparatus adapted for carrying out the methods described herein - is suitable. A typical combination of hardware and software could be a general purpose computer system with a computer program that, when being loaded and executed, controls the computer system such that it carries out the methods described herein.

The present subject matter can also be embedded in a computer program product, which comprises all the features enabling the implementation of the methods described herein, and which - when loaded in a computer system - is able to carry out these methods. Computer program in the present context means any expression, in any language, code or notation, of a set of instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, instructions, messages or message packets, and other computer readable information from the computer readable medium. The computer readable medium may include computer readable storage medium embodying non-volatile memory, such as read-only memory (ROM), flash memory, disk drive memory, CD-ROM, and other permanent storage. Additionally, a computer medium may include volatile storage such as RAM, buffers, cache memory, and network circuits. Furthermore, the computer readable medium may comprise computer readable information in a transitory state medium such as a network link and/or a network interface, including a wired network or a wireless network, that allow a computer to read such computer readable information.

Non-Limiting Examples

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A touch sensitive input apparatus, comprising:
an input panel (104);
at least one capacitive touch sensor (350, 550) disposed on the input panel, each of the at least one capacitive touch sensor having an respective associated location and configured to capacitively couple to a conductor (310,260, 262, 264) in proximity thereto;
a cover (202) having a front surface (360) and a back surface (362), the back surface opposite the front surface, the cover movably positioned over at least part of the input panel with the back surface being opposite the input panel; and
at least one capacitive touch point pass-through (310, 260, 262, 264) located within the cover,
each of the at least one capacitive touch point pass-through having a respective first side (302, 304, 306, 501, 502, 503) and a respective second side (310, 502, 504, 506) that is opposite the respective first side,
the respective first side being exposed on the front surface,
each at least one capacitive touch point pass-through extending through the cover towards the back surface,
the respective second side capacitively coupling to at least one proximate capacitive touch sensor (110,510,512,514) within the at least one capacitive touch sensor when the cover is positioned over at least part of the input panel.

2. The touch sensitive input apparatus of claim 1, wherein the at least one capacitive touch point pass-through comprises:
a plurality of conductive columns (260, 262, 264), each conductive column within the plurality of conductive columns extending from the first side into the cover; and
a bottom plate (310) conductively coupled to each of the plurality of conductive columns, the bottom plate having a surface 312 proximate to the second side.

3. The touch sensitive input apparatus of claim 2, further comprising a touch processor (808) configured to detect (708) a touching of at least a portion of the first side of the at least one capacitive touch point pass-through by detecting capacitive coupling between at least a subset of the at least one capacitive touch sensor and a touching object, wherein the capacitive coupling is through a path (320, 520) comprising the bottom plate.

4. The touch sensitive input apparatus of claims 1, 2 or 3, wherein the at least one capacitive touch point pass-through comprises:
a plurality of conductive columns (260, 262, 264), each conductive column within the plurality of conductive columns having a respective first side (501, 503, 505) forming a part of the first side and a respective second side (502, 504, 506) in proximity to the second side, each conductive column conductively coupling its respective first side to its respective second side, and wherein each conductive column within the plurality of conductive columns is conductively insulated from one another.

5. The touch sensitive input apparatus of claims 1, 2, 3, or 4, wherein the input panel further comprises a display, and
wherein the cover further comprises a display window (206) through which at least a portion of the display can be viewed from the front surface when the cover is positioned over the at least part of the input panel.

6. The touch sensitive input apparatus of claim 1, 2, 3, 4, or 5, further comprising a touch processor (808) configured to detect (708) a touching of at least a portion of the first side of the at least one capacitive touch point pass-through,
wherein the cover further comprises an identification module (250), the identification module supplying information identifying the cover,
wherein the touch processor is further configured to operate with the identification module to retrieve the information, and
wherein the touch processor processes touch indications from a subset of the at least one capacitive touch sensors based on the information.

7. A touch sensitive input panel cover, comprising:
a front surface (360);
a back surface (362), the back surface opposite the front surface; and
at least one capacitive touch point pass-through (320, 520) located within the cover,
each of the at least one capacitive touch point pass-through having a respective first side (302, 304, 306, 501, 502, 503) and a respective second side (310, 502, 504, 506) that is opposite the respective first side,
the respective first side being exposed on the front surface,
each at least one capacitive touch point pass-through extending through the cover towards the back surface,
the respective second side being separated from the back surface.

8. A touch sensitive input panel, comprising:
an input panel (104);
a cover detector (150, 806) configured to detect and identify a detected cover (202, 804) that is positioned over at least part of the input panel;
at least one capacitive touch sensor (350, 550) disposed on the input panel, each of the at least one capacitive touch sensor having an respective associated location and configured to capacitively couple to a conductor (110, 510, 512, 514) in proximity thereto;
a cover characteristic storage (812) configured to store characteristics of at least one cover; and
a touch processor (808) configured to:
detect (708) a capacitive coupling between a subset of the at least one capacitive touch sensor and touching object; and
associate, based on characteristics of the detected cover stored in the cover characteristic storage, a command to perform in response to detecting the capacitive coupling (710, 712, 714).

9. The touch sensitive input panel of claim 8, wherein the touch processor is further configured to:
define, in response to identifying the detected cover and based on stored information associated with the detected cover, a reporting region comprising the subset of the at least one capacitive touch sensor as a swipe input region (710); and
determine, in response to determining the touch input, that the touch input is one of a swipe input and a press input (714), and
wherein, in response to determining the touch input is a press input, the command is a press command (712); and
wherein, in response to determining the touch input is a swipe input, the command is a swipe command (716).

10. A method of processing input from a touch sensitive input panel, the method comprising:
performing at least one of the following with a processor:
determining a presence of a detected cover over a touch sensitive panel (702);
identifying the detected cover (705);
determining, subsequent to identifying the detected cover, a touch input at a reporting region of the touch sensitive panel (708);
associating, in response to identifying the detected cover and based on stored information associated with the detected cover (812), a command with the touch input at the reporting region of the touch sensitive panel (710); and
performing a response to the touch input (712, 716).

11. The method of claim 10, wherein at least one of determining the presence of the detected cover and identifying the detected cover comprises identification of the detected cover based upon receipt of identification information from a wireless identification module (250) associated with the detected cover.

12. The method of claim 10 or 11, further comprising:
defining, in response to identifying the detected cover and based on stored information associated with the detected cover, the reporting region as a press-only region (710),
wherein the command is a press command (712).

13. The method of claim 10, 11, or 12, further comprising:
defining, in response to identifying the detected cover and based on stored information associated with the detected cover, the reporting region with a swipe input region (710); and
determining, in response to determining the touch input, that the touch input is one of a swipe input and a press input (714), and
wherein, in response to determining the touch input is a press input, the command is a press command (712); and
wherein, in response to determining the touch input is a swipe input, the command is a swipe command (716).

14. The method of claim 13, further comprising:
defining, based on determining the presence of the detected cover and based upon identifying the detected cover, a display area (706) corresponding to a window of the detected cover; and
presenting, in response to defining the display area, a visual content in the display area (106).

15. A computer program for instructing a computer to perform the method of any one of claims 10, 11, 12, 13, or 14.
